# EUROPÄISCHE PATENTSCHRIFT

(11) **EP 0 528 204 B1**
(45) Veröffentlichungstag und Bekanntmachung des Hinweises auf die Patenterteilung: **13.09.1995**
(21) Anmeldenummer: 92112621.5
(22) Anmeldetag: 23.07.1992
(51) Int. Cl.: H02G 3/14

(54) **Klemmengehäuse**
Box with clamping means
Boîtier à moyens de serrage

(30) Priorität: 19.08.1991 DE 9110236 U
(43) Veröffentlichungstag der Anmeldung: 24.02.1993
(73) Patentinhaber: BERNSTEIN COMPACT-GEHAEUSE GmbH, D-32479 Hille (DE)
(72) Erfinder: Wecke, Rolf Dipl.Ing., W-3062 Bückeburg (DE); Weiss, Jürgen, D4990 Lübbecke (DE)
(74) Vertreter: Stracke, Alexander, Dipl.-Ing.

(56) Entgegenhaltungen:
- DE-U- 7 904 441
- DE-U- 8 221 282

## Beschreibung

Die vorliegende Erfindung betrifft ein Klemmengehäuse, bestehend aus einem Unterteil und einem am Unterteil lösbar befestigten Deckel, der mit einer umlaufenden und mit einer Dichtung versehenen Nut ausgestattet ist, in die ein vorstehender Rand des Unterteiles eingreift, wobei der Deckel in seinen Eckbereichen mit Stufenbohrungen sowie mit diese Stufenbohrungen durchtretenden, axial und entgegen der Wirkung von Federn verschiebbaren Verschlußbolzen versehen ist, die in ihren dem Unterteil zugewandten Endbereichen Querausleger aufweisen und mit radial verlaufenden Schlitzen versehene Bohrungen des Unterteiles durchtreten und mit ihren Querauslegern an einem Bund des Unterteiles abgestützt sind.

Ein Klemmengehäuse der gattungsgemäßen Art ist aus dem DE-GM 79 04 441 bekannt.

Bei dem dort dargestellten und beschriebenen Klemmengehäuse bestehen die Querausleger der Verschlußbolzen aus Querstiften, die nach dem Einstecken der Verschlußbolzen in die Stufenbohrungen des Deckels in die freien Enden der Verschlußbolzen eingebracht werden.

Der Vorteil einer derartigen Verschlußkonstruktion besteht prinzipiell darin, daß eine sehr schnelle Festlegung des Deckels am Unterteil möglich ist, ebenso wird durch diese Verschlußkonstruktion das Öffnen des Klemmengehäuses erleichtert und vereinfacht.

Aufwendig bei der vorbekannten Konstruktion ist allerdings das Einbringen der Querstifte in die Bolzenenden. Außerdem ist bei der vorbekannten Konstruktion ein Entfernen der Verschlußbolzen aus dem Deckel nur dann möglich, wenn die Querstifte wieder aus den Bolzenenden herausgedrückt werden.

Der vorliegenden Erfindung liegt die Aufgabe zugrunde, ein Klemmengehäuse der gattungsgemäßen Art dahingehend zu verbessern, daß der Montageaufwand für die Verschlußbolzen vereinfacht und das Einführen bzw. das Herausnehmen der Verschlußbolzen aus den Stufenbohrungen des Deckels erleichtert wird.

Diese Aufgabe wird erfindungsgemäß dadurch gelöst, daß der Deckel im Bereich der dem Unterteil zugewandten engeren Bohrungsstufen ebenfalls mit Radialschlitzen versehen ist, welche mit den Schlitzen des Unterteiles fluchten und das die Querausleger der Befestigungsbolzen aus Abplattungen der entsprechenden Bolzenenden bestehen.

Durch diese Maßnahmen wird die Herstellung und Montage der Verschlußbolzen beträchtlich vereinfacht, da die Verschlußbolzen selbst nur noch aus einem Teil bestehen und durch die Radialschlitze der engeren Bohrungsstufen jederzeit bequem in die Stufenbohrungen eingeführt oder auch wieder aus den Stufenbohrungen herausgenommen werden können.

Letzteres ist insbesondere dann von Bedeutung, wenn ein Anwender statt der vorgesehenen Verschlußbolzen aus bestimmten Gründen heraus Verschlußschrauben einsetzen will, umgegebenenfalls zu einer höheren bzw. verbesserten Abdichtung des Klemmengehäuses zu kommen.

Die Verschlußbolzen können nebst der Federn komplett vorgefertigt werden, wobei die Federn zunächst auf die Verschlußbolzen aufgeschoben und dann die freien Enden der Befestigungsbolzen abgeplattet werden, so daß dann die Federn nicht mehr von den Verschlußbolzen abgestreift werden können.

Besondere Ausführungsarten der Erfindung sind Gegenstand von Unteransprüchen.

Ein Ausführungsbeispiel der Erfindung ist in den beigefügten Zeichnungen dargestellt und wird im folgenden näher beschrieben. Es zeigen:

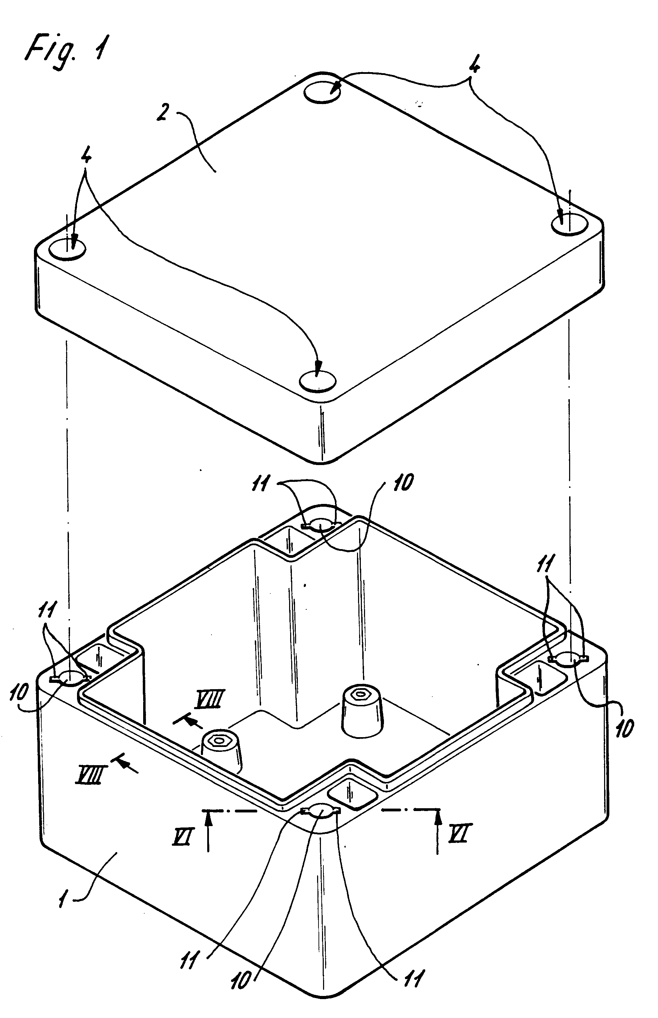

- Figur 1: eine perspektivische Darstellung eines Klemmengehäuses bei abgenommenem Deckel,
- Figur 2: eine Draufsicht auf das Unterteil des Klemmengehäuses,
- Figur 3: eine Ansicht eines Verschlußbolzens zur Festlegung des Deckels am Unterteil,
- Figur 4: eine Ansicht in Richtung des Pfeiles IV in Figur 3,
- Figur 5: eine Ansicht in Richtung des Pfeiles V in Figur 3,
- Figur 6: einen Teilschnitt nach der Linie VI-VI in Figur 1 bei aufgesetztem Deckel und bei eingedrücktem Verschlußbolzen,
- Figur 7: einen gegenüber der Figur 4 um 90° gedrehten Schnitt mit Verschlußbolzen in Schließstellung,
- Figur 8: einen Teilschnitt nach der Linie VIII-VIII in Figur 1 bei aufgesetztem Deckel.

Das in den Zeichnungen dargestellte Klemmengehäuse besteht aus einem Unterteil 1 und einem Deckel 2 und kann sowohl aus Kunststoff wie auch aus Metall hergestellt sein.

Der Deckel 2 ist in seinen Eckbereichen mit Verschlußbolzen 3 versehen, welche den Deckel 2 im Bereich von Stufenbohrungen 4 durchtreten.

Jeder Verschlußbolzen 3 wird von einer Feder 5 umgeben, die sich einerseits am Kopf 7 des Verschlußbolzens 3 abstützt und andererseits auf einem Stützbund (8) einer Stufenbohrung 4 des Deckels 2 aufliegt, wenn der Verschlußbolzen 3 in die entsprechende Stufenbohrung 4 des Deckels 2 eingeschoben ist.

An seinem freien Ende ist jeder Verschlußbolzen 3 mit einem Querausleger 9 ausgestattet, der durch eine Abplattung des entsprechenden Bolzenendes gebildet ist.

Durch diesen Querausleger 9 wird die Feder 5 auf dem Schaft des Verschlußbolzens gesichert, d.h., daß die Feder 5 nach dem abplatten des entsprechenden Bolzenendes zum Querausleger 9 nicht mehr vom Schaft des Verschlußbolzens 3 abgenommen werden kann.

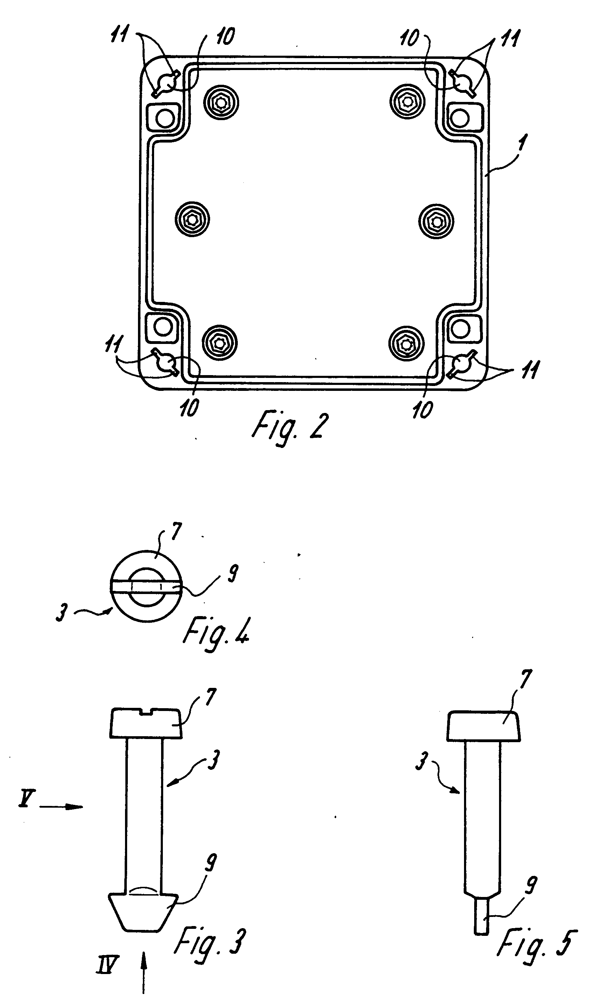

Das Unterteil 1 des Klemmengehäuses ist mit koaxial zu den Stufenbohrungen 4 des Deckels angeordneten Bohrungen 10 ausgestattet, wobei diese Bohrungen mit radial verlaufenden Schlitzen 11 versehen sind, was Figur 2 anschaulich zeigt. Die dem Unterteil 1 zugewandten, inneren Bohrungsstufen der Stufenbohrungen 4 sind ebenfalls mit Radialschlitzen versehen, welche mit den Schlitzen 11 des Unterteiles 1 fluchten.

Die Radialschlitze in den inneren Bohrungsstufen der Stufenbohrungen 4 des Deckels 2 ermöglichen das problemlose Einsetzen und Durchstecken der mit den Federn 5 ausgestatteten Verschlußbolzen 3 und darüberhinaus das Befestigen des Deckels 2 am Unterteil 1, da nach dem Durchstecken der einzelnen Verschlußbolzen 3 diese durch eine geringfügige Drehung, beispielsweise um 90°, mit ihren Querauslegern an einem Bund 12 des Unterteiles 1 abgestützt sind.

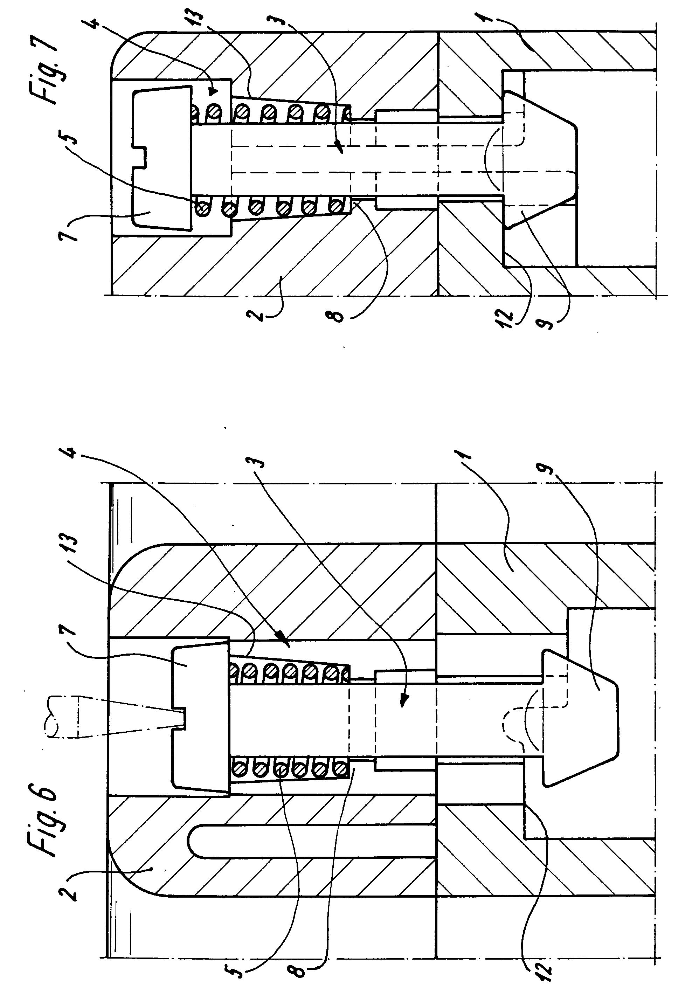

Eine derartige Verschlußstellung ergibt sich sehr anschaulich aus Figur 7. Nach einer entsprechenden weiteren Drehung können die Querausleger 9 wieder in eine Flucht mit den Schlitzen 11 und den entsprechend verlaufenden Radialschlitzen der Stufenbohrungen 4 gebracht werden, so daß nunmehr ein Lösen des Deckels 2 vom Unterteil 1 möglich ist.

Bei abgenommenem Deckel 2 befinden sich die Querausleger 9 in den Radialschlitzen des Deckels 2, so daß die Verschließbolzen 3 gegen Verdrehungen gesichert sind und sich immer in Verschließposition befinden.

Wie insbesondere die Figuren 6 und 7 zeigen, sind die Stufenbohrungen 4 im Bereich des jeweiligen Stützbundes 8 zur Deckeloberseite hin konisch erweitert, wobei der Durchmesser dieser konisch erweiterten Bohrungsstufen 13 im Bereich des jeweiligen Stützbundes 8 so gewählt ist, daß die Federn 5 beim Eindrücken in die Stufenbohrungen 4 in diesem Abschnitt festgeklemmt werden. Dadurch wird eine im Prinzip unverlierbare Sicherung der Verschlußbolzen 3 am Deckel 2 erreicht, bei Bedarf kann aber unter Aufbringung entsprechender Kräfte dieser Verschlußbolzen 3 nebst Feder 5 auch wieder aus der Stufenbohrung 4 herausgedrückt werden, falls dies gewünscht wird.

Das Einsetzen oder Herausnehmen der Verschlußbolzen erfordert weder spezielle Werkzeuge noch besondere Vorrichtungen.

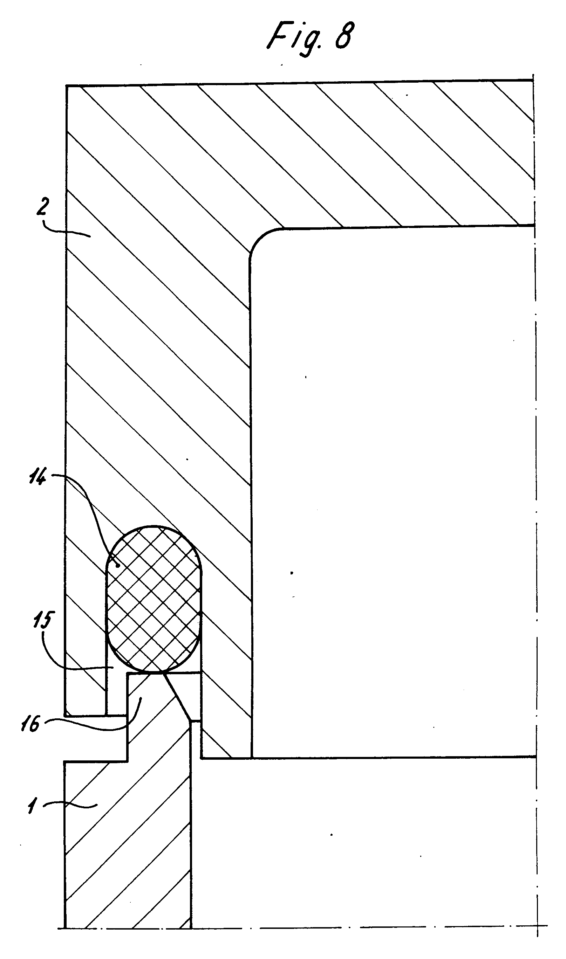

Wie Figur 8 deutlich macht, ist der Deckel 2 mit einer umlaufenden und mit einer Dichtung 14 versehenen Nut 15 ausgestattet, in welche in Schließstellung ein vorstehender Rand 16 des Unterteiles 1 eingreift.

Durch die Wirkung der Feder 5 wird der Deckel 2 in Schließstellung mit einer vorbestimmten Kraft auf das Unterteil 1 aufgedrückt, so daß sich eine Verformung der Dichtung 14 und somit eine einwandfreie Abdichtung der Trennfuge zwischen Unterteil 1 und Deckel 2 ergibt.

Sollte die Dichtwirkung bei Bedarf erhöht werden, kann es erforderlich sein, höhere Anpreßkräfte aufzubringen, als dies mit den Federn 5 möglich ist. In diesem Falle werden die Verschlußbolzen 3 entfernt, was aufgrund der erfindungsgemäßen Konstruktion schnell und einfach möglich ist und durch Verschlußschrauben ersetzt, die dann die Aufbringung höherer Anpreßkräfte ermöglichen.

## Patentansprüche

1. Klemmengehäuse, bestehend aus einem Unterteil (1) und einem am Unterteil (1) lösbar befestigten Deckel (2), der mit einer umlaufenden und mit einer Dichtung (14) versehenen Nut (15) ausgestattet ist, in die ein vorstehender Rand (16) des Unterteiles (1) eingreift, wobei der Deckel (2) in seinen Eckbereichen mit Stufenbohrungen (4) sowie mit diese Stufenbohrungen (4) durchtretenden, axial und entgegen der Wirkung von Federn (5) verschiebbaren Verschlußbolzen (3) versehen ist, die in ihren dem Unterteil (4) zugewandten Endbereichen Querausleger (9) aufweisen und mit radial verlaufenden Schlitzen (11) versehene Bohrungen des Unterteiles (1) durchtreten und mit ihren Querauslegern (9) an einem Bund des Unterteiles (1) abgestützt sind, **dadurch gekennzeichnet,** daß der Deckel (2) im Bereich der dem Unterteil (1) zugewandten engeren Bohrungsstufen ebenfalls mit Radialschlitzen versehen ist, welche mit den Schlitzen (11) des Unterteiles (1) fluchten und daß die Querausleger (9) der Verschlußbolzen (3) aus Abplattungen der entsprechenden Bolzenenden bestehen.

2. Klemmengehäuse nach Anspruch 1, dadurch gekennzeichnet, daß die Federn (5), welche den jeweiligen Schaft eines Verschlußbolzen (3) umgeben, einerseits am Kopf (7) eines Verschlußbolzens (3) und andererseits an einem Stützbund (8) einer Stufenbohrung (4) des Deckels (2) abgestützt sind.

3. Klemmengehäuse nach Anspruch 2, dadurch gekennzeichnet, daß jede Stufenbohrung (4) des Deckels (2) vom Stützbund (8) ausgehend eine zur Deckeloberseite hin konisch erweiterte Bohrungsstufe (13) aufweist, wobei der kleinste Durchmesser dieser konischen Bohrungsstufe (13) geringfügig kleiner ist als der Außendurchmesser der Feder (5).

4. Klemmengehäuse nach einem oder mehreren der Ansprüche 1 bis 3, dadurch gekennzeichnet, daß das Unterteil (1) und/oder das Oberteil (2) aus Kunststoff oder aus Metall gefertigt sind.

## Claims

1. A box for terminals comprising a bottom portion (1) and a cover (2) releasably fixed to the bottom portion (1) and provided with a groove (15) which extends around the cover and which is provided with a seal (14) and into which engages a projecting edge (16) of the bottom portion (1), wherein in its corner regions the cover (2) is provided with stepped bores (4) and with locking pins (3) which pass through the stepped bores (4) and which are displaceable axially and against the force of springs (5) and which in their end regions towards the bottom portion (1) have transverse projection portions (9) and pass through bores provided with radially extending slots (11) in the bottom portion (1) and are supported with their transverse projection portions (9) against a shoulder of the bottom portion (1), characterised in that in the region of the narrower bore steps which are towards the bottom portion (1) the cover (2) is also provided with radial slots which are aligned with the slots (11) in the bottom portion (1) and that the transverse projection portions (9) of the locking pins (3) comprise flattened parts of the corresponding pin ends.

2. A box according to claim 1 characterised in that the springs (5) which surround the respective shank of a locking pin (3) are supported on the one hand against the head (7) of a locking pin (3) and on the other hand against a support shoulder (8) of a stepped bore (4) in the cover (2).

3. A box according to claim 2 characterised in that each stepped bore (4) of the cover (2), starting from a support shoulder (8), has a bore step (13) which is conically enlarged towards the top side of the cover, wherein the smallest diameter of said conical bore step (13) is slightly smaller than the outside diameter of the spring (5).

4. A box according to one or more of claims 1 to 3 characterised in that the bottom portion (1) and/or the top portion (2) are made from plastics material or metal.

## Revendications

1. Boîte à bornes, constituée d'une partie inférieure (1) et d'un couvercle (2), fixé de manière amovible sur la partie inférieure (1), lequel présente une rainure (15) périphérique, pourvue d'une garniture d'étanchéité (14), rainure dans laquelle s'engage un bord saillant (16) de la partie inférieure (1), le couvercle (2) étant pourvu, dans ses zones d'angle, de perçages étagés (4) ainsi que de goujons de fermeture (3) traversant ces perçages étagés (4) coulissant axialement et à l'encontre de l'effet de ressorts (5), lesquels goujons présentent dans leurs zones d'extrémité tournées vers la partie inférieure (1), des bras transversaux (9) et passent à travers des perçages de la partie inférieure (1) pourvus de fentes radiales (11) et prennent appui, avec leurs bras transversaux (9), contre un épaulement de la partie inférieure (1), caractérisée en ce que le couvercle (2) est également pourvu dans la zone des gradins plus étroits des perçages, tournés vers la partie inférieure (1), de fentes radiales qui sont alignées avec les fentes (11) de la partie inférieure (1) et en ce que les bras transversaux (9) des goujons de fermeture (3) sont constitués par des parties aplaties des extrémités correspondantes des goujons.

2. Boîte à bornes selon la revendication 1, caractérisée en ce que les ressorts (5), qui entourent la tige respective d'un goujon de fermeture (3), prennent appui d'une part contre la tête (7) d'un goujon de fermeture (3) et d'autre part contre un épaulement d'appui (8) d'un perçage étagé (4) du couvercle (2).

3. Boîte à bornes selon la revendication 2, caractérisée en ce que chaque perçage étagé (4) du couvercle (2), partant de l'épaulement d'appui (8), présente un gradin de perçage (13) s'élargissant coniquement vers la face supérieure du couvercle, le plus petit diamètre de ce gradin (13) conique étant légèrement inférieur au diamètre extérieur du ressort (5).

4. Boîte à bornes selon une ou plusieurs des revendications 1 à 3, caractérisée en ce que la partie inférieure (1) et/ou la partie supérieure (2) sont en matière plastique ou en métal.
